# EUROPEAN PATENT APPLICATION

(11) **EP 4 395 035 A1**
(43) Date of publication of application: **03.07.2024**
(21) Application number: 22926650.7
(22) Date of filing: 13.06.2022
(51) Int. Cl.: H01M 50/298, H01M 50/296, H01M 50/10, H01M 50/20, H01M 50/249, H01R 13/00

(54) **BATTERY BOX AND BATTERY PACK**

(30) Priority: 21.02.2022 CN 202220344617 U
(71) Applicant: Eve Power Co., Ltd., Jingmen Hubei 448000 (CN)
(72) Inventor: LIU, Pingping, Hubei 448000 (CN); WANG, Zhuo, Hubei 448000 (CN); TANG, Jie, Hubei 448000 (CN); ZHANG, Duo, Hubei 448000 (CN); JIANG, Jibing, Hubei 448000 (CN); LI, Yiheng, Hubei 448000 (CN)
(74) Representative: Herrero & Asociados, S.L.
(86) International application number: PCT/CN2022/098302
(87) International publication number: WO 2023/155340

(57) **Abstract**

A battery case and a battery pack are provided. The battery case includes a case portion and a blocking cover. The case portion defines a cavity; a BMS assembly is received in the cavity; an outside of the case portion is recessed to define a mounting slot; the case portion further defines a plug docking hole communicated with the mounting slot; a harness plug is received in the plug docking hole; the harness plug is connected to the BMS assembly via the connection harness; a wall of the mounting slot defines a harness opening which allows the connection harness to pass through and is communicated with the cavity; the blocking cover blocks an opening of the mounting slot.

## Description

The present application claims priority to the Chinese Patent Application No. 202220344617.5, which was filed on February 21, 2022 in the National Intellectual Property Administration of China, and the content of which is herein incorporated by reference in its entirety.

### TECHNICAL FIELD

The present disclosure relates to the field of batteries, and in particular to a battery case and a battery pack.

### BACKGROUND

As the international environment and technologies related to energies are innovated, development of new energy vehicles is unstoppable. Especially, electric vehicles are developed rapidly. A battery management system (BMS) is the core for managing a power battery and overall communication of the vehicle. A working condition of the BMS directly affects performance and safety of electric vehicle. The BMS may be seriously influenced by a harsh environment inside the power battery, electromagnetic interference, temperature and humidity and other factors. Therefore, a material of a case body of the BMS, an outer shape and other configurations are quite important.

In the art, in a 12V battery system, an output signal connector of the battery case is connected to an upper cover of the battery case in following two manners.

In a first manner, the connector is directly inserted into the BMS to be fixed with the BMS. The connection is also directly inserted into the upper cover. An accumulative tolerance is present inside the battery pack during assembling, and the upper cover of the battery case has a processing tolerance. Therefore, the direct insertion may lead to assembling difficulties and poor fit precision. A stress may be caused after the BMS is assembled, and the system may have poor airtightness.

In a second manner, BMS signals are output to the upper cover of the battery case by a harness connector. In this case, a technical risk is reduced, however, the assembling may be difficult. During assembling, a harness is firstly connected to the upper cover, and subsequently, the BMS is plugged blindly. At this moment, glue has been coated to the battery case. Therefore, in the above assembling process, the glue may be contacted. In addition, in this manner, a certain length of the harness needs to be reserved to leave a space for manual operation. The harness in the battery pack is not fixed and may be shaking, rubbed, generate noise and cause other risks.

### SUMMARY OF THE DISCLOSURE

The present disclosure provides a battery case, having a reduced assembling difficulty and an improved assembling quality.

The present disclosure provides a battery pack having improved safety.

The present disclosure provides following technical solutions.

In a first aspect, a battery case is provided and includes a case portion. The case portion defines a cavity; a battery management system assembly, BMS assembly, is received in the cavity; the battery case further comprises a blocking cover; an outer wall of the case portion is recessed to define a mounting slot; the case portion further defines a plug docking hole communicated with the mounting slot; a harness plug is received in the plug docking hole; the harness plug is connected to the BMS assembly via the connection harness; a wall of the mounting slot defines a harness opening which allows the connection harness to pass through and is communicated with the cavity; the blocking cover blocks an opening of the mounting slot.

In a second aspect, a battery pack is provided and includes the battery case as described in the above.

### BRIEF DESCRIPTION OF THE DRAWINGS

The present disclosure will be further described in detail based on the following accompanying drawings and embodiments.
FIG. 1 is a schematic view of a battery case according to an embodiment of the present disclosure.
FIG. 2 is a schematic view of the battery case (where blocking cover is omitted) according to an embodiment of the present disclosure.
FIG. 3 is a cross-sectional view of the battery case according to an embodiment of the present disclosure.
FIG. 4 is a schematic view of a case body and a case cover that are separated from each other according to an embodiment of the present disclosure.
FIG. 5 is a schematic view of the case cover according to an embodiment of the present disclosure.
FIG. 6 is a schematic view of the blocking cover according to an embodiment of the present disclosure.
FIG. 7 is a schematic view of a fastening member according to an embodiment of the present disclosure.

### Reference numerals in the drawings:

1, case body; 11, cavity; 12, adhesive slot; 2, case cover; 21, cover body; 211, mounting slot; 212, harness opening; 213, plug docking hole; 214, first slot wall; 215, second slot wall; 216, slot; 217, connection hole; 218, notch; 219, plug docking block; 22, blocking cover; 221, rib; 3, connection harness; 31, harness plug; 4, BMS assembly; 5, fastening member; 51, fastening body; 52, connection portion.

### DETAILED DESCRIPTION

Technical solutions of the embodiments of the present disclosure will be described in further detail in the following by referring to the accompanying drawings. Obviously, the described embodiments are only a part of but not all of the embodiments of the present disclosure. All other embodiments, which are obtained by any ordinary skilled person in the art based on the embodiments in the present disclosure without any creative work, shall fall within the scope of the present disclosure.

In the description of the present disclosure, unless otherwise expressly specified and limited, the terms "interconnected", "connected", and "fixed" shall be understood in a broad sense. For example, connection may be fixed connection, detachable connection or connection into a one-piece structure; or may be mechanical connection or electrical connection; or may be direct connection or indirect connection through an intermediate medium; or may be internal communication between two elements or interaction between two elements. Any ordinary skilled person in the art shall understand specific meanings of the above terms in the present disclosure case by case.

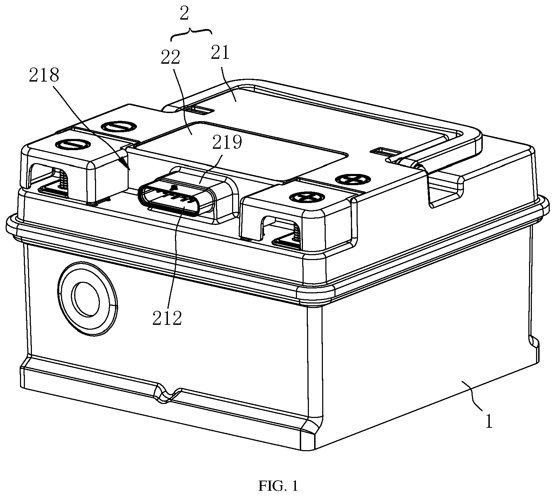

As shown in FIG. 1 to FIG. 4, the present disclosure provides a battery case including a case portion and a blocking cover 22. The case portion defines a cavity 11 therein. A BMS assembly 4 is received in the cavity 11. An outer wall of the case portion is recessed to define a mounting slot 211. A wall of the mounting slot 211 defines a harness opening 212 which allows the connection harness 3 to pass through and is communicated with the cavity 11. The case portion further defines a plug docking hole 213 communicated with the mounting slot 211. A harness plug 31 is received in the plug docking hole 213. The harness plug 31 is connected to the BMS assembly 4 via the connection harness 3. An end of the connection harness 3 is connected to the BMS assembly 4, and the other end of the connection harness 3 is arranged with the harness plug 31. The harness plug 31 extends through the harness opening 212 to be inserted into the plug docking hole 213. The blocking cover 22 blocks an opening of the mounting slot 211. By defining the mounting slot 211 and the harness opening 212 in the case portion, the connection harness 3 and the BMS assembly 4 may be connected to each other firstly, and subsequently, the harness plug 31 of the connection harness 3 extends through the harness opening 212 to be inserted into the plug docking hole 213. In this way, when the battery case is being assembled, blind insertion may be avoided. Difficulty of assembling the battery case may be reduced. A hand of an operator may be prevented from touching glue by mistake. Assembling quality of the battery case may be improved. The connection harness 3 may be collected inside the mounting slot 211, such that the connection harness 3 is prevented from binding with other structures of the battery case. By arranging the blocking cover 22, the blocking cover 22 may block the mounting slot 211, such that the mounting slot 211 and the cavity 11 are isolated from the external environment, airtightness of the battery case is ensured.

For example, the case portion includes a case body 1 and a cover body 21. The cavity 11 is defined in the case body 1. The cover body 21 is connected to the case body 1 and to seal the cavity 11. The mounting slot 211 and the plug docking hole 213 are both defined in the cover body 21. In the present embodiment, the cover body 21 and the blocking cover 22 are connected to each other to form the case cover 2. By arranging the case body 1 and the cover body 21, the case portion is formed by combining the case body 1 with the cover body 21, such that the BMS assembly 4 may be mounted easily, and the difficulty of assembling the battery case may be reduced.

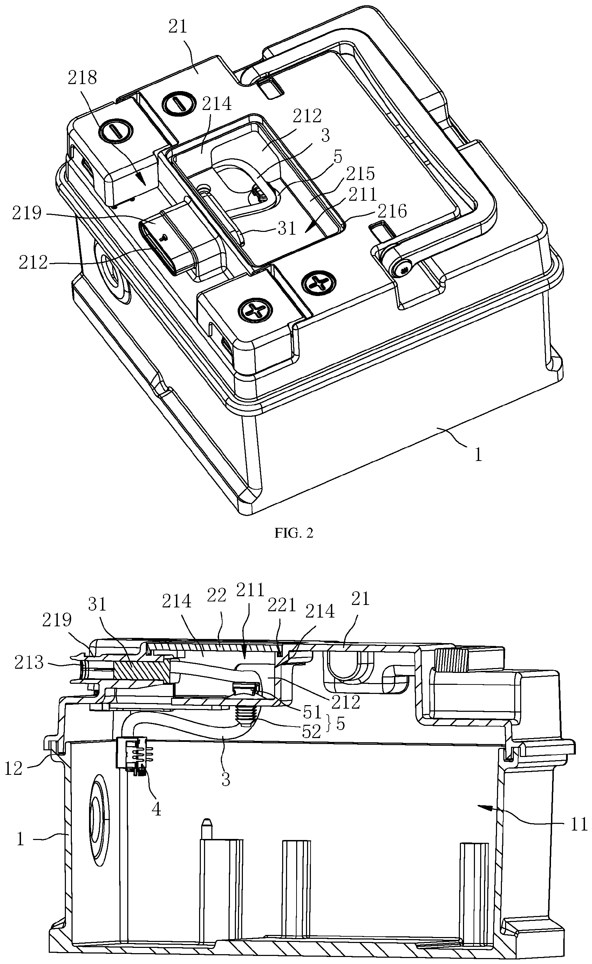

As shown in FIG. 2, for example, the mounting slot 211 has a first slot wall 214. The harness opening 212 is defined in a slot bottom of the mounting slot 211 and extends from the slot bottom to the first slot wall 214. By defining the harness opening 212 to extend from the slot bottom of the mounting slot 211 to the first slot wall 214, a size of the harness opening 212 may be increased by using a space in a vertical direction, such that the harness plug 31 is facilitated to pass through the harness opening 212, and the battery case is assembled easily.

For example, the mounting slot 211 further includes a second slot wall 215. The second slot wall 215 is connected to the first slot wall 214. The harness opening 212 extends to the second slot wall 215. That is, in the present embodiment, the harness opening 212 is defined in a position where the first slot wall 214, the second slot wall 215, and the slot bottom of the mounting slot 211 are connected to each other and extends to reach the first slot wall 214, the second slot wall 215, and the slot bottom of the mounting slot 211. In this way, the space in the vertical direction is used optimally to increase the size of the harness opening 212, and the difficulty of assembling the BMS is reduced. In the present embodiment, a size of the mounting slot 211 is 88mm*48mm*21.5mm, and the size of the harness opening 212 is 35 mm.

For example, a side of the cover body 21 is recessed to define a notch 218. The mounting slot 211 is located adjacent to the notch 218. A plug docking block 219 is protruding from an inner wall of the notch 218. The plug docking hole 213 extends through the plug docking block 219. In order to ensure connection stability of the harness plug 31, the plug docking hole 213 needs to have a certain depth to secure the harness plug 31. The harness plug 31 is further configured to connect to an external device. Therefore, a certain connection space is to be defined at a peripheral portion of the harness plug 31. By defining the notch 218, a connection space that allows the harness plug 31 to be connected to the external device is provided. In addition, the plug docking block 219 may be received in the notch 218, such that the plug docking block 219 is prevented from protruding out of the side of the case cover 2. In this way, a probability that the plug docking block 219 is collided with any external element is reduced, and the harness plug 31 may be less likely to be damaged due to collision.

For example, a fastening member 5 is received in the mounting slot 211. The fastening member 5 is configured to secure the connection harness 3. In the present embodiment, the connection harness 3 is collected in the mounting slot 211. By arranging the fastening member 5 inside the mounting slot 211, the fastening member 5 may secure the connection harness 3 inside the mounting slot 211, and the connection harness 3 is prevented from shaking and generating noise.

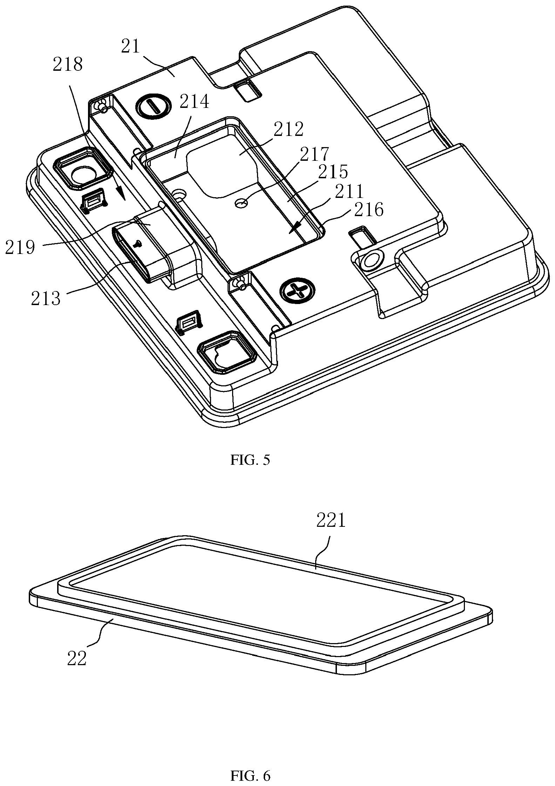

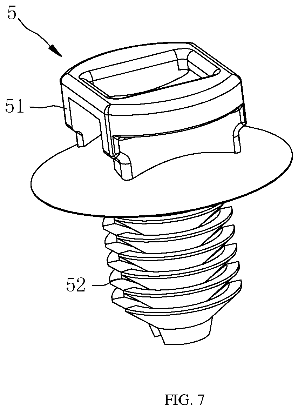

As shown in FIG. 7, the fastening member 5 includes a fastening body 51 and a connection portion 52 connected to the fastening body 51. The fastening body 51 defines a harness groove (not shown in the drawings). The connection harness 3 in the mounting slot 211 may be secured by the harness groove and the fastening body 51. When the fastening member 5 is connected to the wall of the mounting slot 211, the connection harness 3 may be secured to the mounting slot. In the present embodiment, the fastening member 5 and the cover body 21 are detachably connected to each other. As shown in FIG. 5, for example, a connection hole 217 is defined in a wall of the mounting slot 211, and the connection portion 52 is inserted in the connection hole 217. Since the fastening member 5 and the cover body 21 are detachably connected to each other, a position at which the fastening member 5 is arranged and the number of fastening members 5 may be adjusted according to demands, such that the connection harness 3 may be secured easily. The connection portion 52 has a simple structure, and the fastening body 51 is fixed in the connection hole 217 by the connection portion 52. In this way, difficulty of assembling the fastening member 5 with the cover body 21 may be reduced, and a manufacturing cost of the fastening member 5 may be reduced, and therefore, a cost of the battery case may be reduced. In the present embodiment, the connection portion 52 is arranged with a disk-shaped member. When the connection portion 52 is inserted into the connection hole 217, the disk-shaped member tightly abuts against a surface of the cover body 21 to prevent the fastening member 5 from falling off from the cover body 21. In the present embodiment, the connection hole 217 is defined in the slot bottom of the mounting slot 211. In this case, the fastening member 5 is fastened at the slot bottom of the mounting slot 211. In other embodiments, the fastening member 5 may be mounted on the slot wall or the slot bottom of the mounting slot 211 by screws. Connection between the fastening member 5 and the cover body 21 may be determined according to demands in practice.

In the present embodiment, the blocking cover 22 and the cover body 21 are fixed to each other by laser welding. A size of the blocking cover 22 is larger than a size of the opening of the mounting slot 211. The welding is performed along a circumference of the blocking cover 22. A gap between the blocking cover 22 and the cover body 21 is sealed. In this way, the airtightness of the battery case is ensured.

As shown in FIG. 6, for example, the blocking cover 22 is arranged with a rib 221. By arranging the rib 221, strength of the blocking cover 22 may be increased, and the blocking cover 22 may be prevented from being deformed.

For example, the rib 221 is disposed on a side of the blocking cover 22 near the cover body 21 and arranged to form a loop. As shown in FIG. 2, the cover body 21 defines one loop of slot 216 around the mounting slot 211. The rib 221 is inserted into the slot 216. By arranging one loop of the rib 221 on the blocking cover 22, i.e., arranging the rib 221 at the welding position of the blocking cover 22, deformation of the blocking cover 22 caused by welding may be reduced. By defining the slot 216, a space for receiving the rib 221 is provided, such that an upper surface of the blocking cover 22 may be aligned with an upper surface of the cover body 21, and an outer appearance of the battery case may be improved. In the present embodiment, the slot 216 is a welding slot and is further configured to be sealed to and welded with the blocking cover 22.

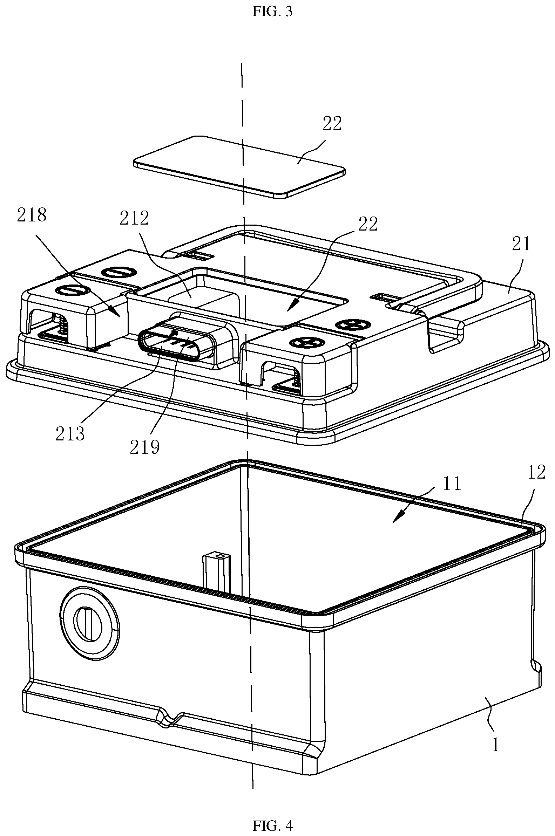

In the present embodiment, the case body 1 and the case cover 2 are fixed to each other by an adhesive. As shown in FIGS. 3 and 4, the case body 1 defines an adhesive slot 12 at a periphery of the case body 1. The case cover 2 is inserted into the adhesive slot 12 to be fixed with the case body 1 by the adhesive.

The present embodiment further provides a battery pack including the battery case as described above. Due to the good quality of the battery case provided in the present embodiment, the battery case of the present embodiment may operate in a safe environment. The battery case may be facilitated to control and manage a battery module arranged in the battery pack, and safety performance of the battery pack may be improved.

In the description herein, it is to be understood that the terms "up", "down", "left", "right", and other orientation or positional relationships are based on orientation or positional relationships shown in the accompanying drawings. The terms are used for ease of description and to simplicity operations, but shall not be interpreted as indicating or implying that the device or the element referred to must be constructed and operated in the described orientation. Therefore, the terms shall not be interpreted as limitations of the present disclosure. In addition, the terms "first" and "second" are used only to descriptively distinguish features and have no special meaning.

In the description of the present disclosure, the terms "an embodiment", "example", and so on are intended to mean that a specific feature, structure, material, or property described in an embodiment or example is included in at least one embodiments or examples of the present disclosure. In the present specification, schematic representations of the above terms do not necessarily refer to a same one embodiment or example.

In addition, it should be understood that, although the present disclosure is described in accordance with embodiments, each embodiment may not include only one independent technical solution. The specification is recited in such a manner merely for clarity. Any ordinary skilled person in the art shall take the specification as a whole, and technical solutions in various embodiments may be appropriately combined with each other to form other embodiments that can be understood by any ordinary skilled person in the art.

## Claims

1. A battery case, comprising a case portion,
wherein, the case portion defines a cavity; a battery management system assembly, BMS assembly, is received in the cavity; the battery case further comprises a blocking cover; an outer wall of the case portion is recessed to define a mounting slot; the case portion further defines a plug docking hole communicated with the mounting slot; a harness plug is received in the plug docking hole; the harness plug is connected to the BMS assembly via the connection harness; a wall of the mounting slot defines a harness opening which allows the connection harness to pass through and is communicated with the cavity; the blocking cover blocks an opening of the mounting slot.

2. The battery case according to claim 1, wherein, the case portion comprises a case body and a cover body; the cavity is defined in the case body; the cover body is connected to the case body and to seal the cavity; the mounting slot and the plug docking hole are both defined in the cover body.

3. The battery case according to claim 1, wherein, the mounting slot has a first slot wall; the harness opening is defined in a slot bottom of the mounting slot and extends from the slot bottom to the first slot wall.

4. The battery case according to claim 3, wherein, the mounting slot further has a second slot wall; the second slot wall is connected to the first slot wall; the harness opening further extends to reach the second slot wall.

5. The battery case according to claim 2, wherein, a side of the cover body is recessed to define a notch; the mounting slot is located adjacent to the notch; a plug docking block is protruding from an inner wall of the notch; the plug docking hole extends through the plug docking block.

6. The battery case according to claim 1, wherein a fastening member is received in the mounting slot; the fastening member is configured to secure the connection harness.

7. The battery case according to claim 6, wherein the fastening member and the cover body are detachably connected to each other.

8. The battery case according to claim 7, wherein a connection hole is defined in a wall of the mounting slot; the fastening member comprises a fastening body and a connection portion connected to the fastening body; the fastening body defines a harness groove, the connection harness is snapped in the harness groove, the connection portion is inserted in connection hole.

9. The battery case according to claim 1, wherein the blocking cover is arranged with a rib.

10. The battery case according to claim 9, wherein the rib is disposed on a side of the blocking cover near the cover body, the cover body defines one loop of slot around the mounting slot, and the rib is inserted into the slot.

11. The battery case according to claim 1, wherein the blocking cover is welded to the case portion.

12. A battery pack, comprising a battery case, wherein, the battery case comprises a case portion, the case portion defines a cavity, a battery management system assembly, BMS assembly, is received in the cavity; and
the battery case further comprises a blocking cover; an outer wall of the case portion is recessed to define a mounting slot; the case portion further defines a plug docking hole communicated with the mounting slot; a harness plug is received in the plug docking hole; the harness plug is connected to the BMS assembly via the connection harness; a wall of the mounting slot defines a harness opening which allows the connection harness to pass through and is communicated with the cavity; the blocking cover blocks an opening of the mounting slot.

13. The battery pack according to claim 12, wherein, the case portion comprises a case body and a cover body; the cavity is defined in the case body; the cover body is connected to the case body and to seal the cavity; the mounting slot and the plug docking hole are both defined in the cover body.

14. The battery pack according to claim 12, wherein, the mounting slot has a first slot wall; the harness opening is defined in a slot bottom of the mounting slot and extends from the slot bottom to the first slot wall.

15. The battery pack according to claim 14, wherein, the mounting slot further has a second slot wall; the second slot wall is connected to the first slot wall; the harness opening further extends to reach the second slot wall.

16. The battery pack according to claim 13, wherein, a side of the cover body is recessed to define a notch; the mounting slot is located adjacent to the notch; a plug docking block is protruding from an inner wall of the notch; the plug docking hole extends through the plug docking block.

17. The battery pack according to claim 12, wherein, a fastening member is received in the mounting slot; the fastening member is configured to secure the connection harness.

18. The battery pack according to claim 17, wherein, the fastening member and the cover body are detachably connected to each other.

19. The battery pack according to claim 18, wherein, a connection hole is defined in a wall of the mounting slot; the fastening member comprises a fastening body and a connection portion connected to the fastening body; the fastening body defines a harness groove, the connection harness is snapped in the harness groove, the connection portion is inserted in connection hole.

20. The battery pack according to claim 12, wherein, the blocking cover is arranged with a rib.
